# FASCICULE DE BREVET EUROPEEN

(11) **EP 3 359 903 B1**
(45) Date de publication et mention de la délivrance du brevet: **04.11.2020**
(21) Numéro de dépôt: 16777624.4
(22) Date de dépôt: 27.09.2016
(51) Int. Cl.: F41G 3/02

(54) **PROCÉDÉ DE VISÉE COLLABORATIVE**
KOLLABORATIVES SICHTVERFAHREN
COLLABORATIVE SIGHTING METHOD

(30) Priorité: 29.09.2015 FR 1559158
(43) Date de publication de la demande: 15.08.2018
(73) Titulaire: Safran Electronics & Defense, 92100 Boulogne-Billancourt (FR)
(72) Inventeur: YELLOZ, Jacques, 92100 Boulogne Billancourt (FR); THIEBAUT, Maxime, 92100 Boulogne Billancourt (FR); MAGNIEZ, Guillaume, 92100 Boulogne Billancourt (FR); BOUSQUET, Marc, 92100 Boulogne Billancourt (FR); GUETTIER, Christophe, 92100 Boulogne Billancourt (FR)
(74) Mandataire: Cabinet Le Guen Maillet
(86) Numéro de dépôt international: PCT/EP2016/072948
(87) Numéro de publication internationale: WO 2017/055262

(56) Documents cités:
- US-A1- 2007 209 501
- US-A1- 2012 201 469
- US-A1- 2015 146 015

## Description

La présente invention concerne un procédé de visée collaborative entre des dispositifs de visée situés à des positions géographiques différentes, des dispositifs de visée aptes à mettre en œuvre ledit procédé et un système comprenant une pluralité de dispositifs de visée dans lequel est mis en œuvre ledit procédé.

Il est fréquent que plusieurs opérateurs équipés de moyens d'observation ou de visée et observant une même scène soient amenés à coordonner une action commune. Une telle situation se produit, par exemple, lorsqu'un observateur doit désigner à d'autres observateurs distants une ou plusieurs cibles.

Dans une première approche permettant de gérer ce type de situation, un premier opérateur décrit oralement une cible à au moins un second opérateur en utilisant un moyen de communication tel qu'un moyen de communication radio. La cible et des éléments distinctifs environnant cette cible sont décrits. Le second observateur peut alors focaliser son dispositif de visée sur la cible. Cette approche, bien que très utilisée, est relativement approximative et présente donc des risques d'erreurs pouvant avoir des conséquences très fâcheuses dans certains contextes.

Une deuxième approche repose sur le fait que chaque observateur dispose d'un dispositif de localisation permettant de mesurer des informations de localisation dudit observateur telles qu'une position dudit observateur dans un repère géographique commun et une direction dans laquelle ledit observateur vise. Dans cette approche, au moins un observateur appelé « coordinateur », dispose d'un dispositif de mesure de distance qui, lorsqu'il est utilisé en combinaison avec le dispositif de localisation dudit coordinateur, lui permet de déterminer une position géographique d'une cible. La position géographique déterminée de la cible est ensuite transmise à l'aide d'un moyen de communication aux autres observateurs appelés « destinataires ». Les destinataires, connaissant ainsi leur position relative par rapport à la cible, peuvent alors focaliser leur dispositif de visée sur ladite cible.

Les dispositifs de localisation, tels qu'un dispositif GPS (Système de positionnement global : « Global Positioning System » en terminologie anglo-saxonne) et les dispositifs de mesure de distance, tels qu'un télémètre laser et un compas magnétique, permettant, lorsqu'ils sont utilisés en combinaison, de déterminer précisément la position relative d'un observateur par rapport à sa cible, sont peu répandus car très coûteux et lourds. Pour cette raison, un observateur classique possède peu de moyens de localisation en dehors de son dispositif de visée et parfois d'un dispositif GPS.

Le document US 2015/146015 A1 divulgue un système de visée collaborative implémenté par une pluralité d'appareils de visée, chacun comprenant une caméra et un écran d'affichage; un appareil de visé est utilisé comme désignateur, et un autre comme chercheur; une cible désignée à l'intérieur d'une image du désignateur est recherchée dans l'image du chercheur en utilisant des méthodes de mise en correspondance des caractéristiques des images et de leurs descripteurs par transformation homographique et optimisation par ajustement par lot.

L'invention a pour objectif de résoudre les problèmes mentionnés ci-dessus. L'invention vise notamment à proposer un procédé de visée collaborative entre des dispositifs de visée situés à des positions géographiques différentes permettant aux dispositifs de visée d'échanger des informations représentatives d'une cible fiables et précises.

A cet effet, selon un premier aspect de la présente invention, la présente invention concerne un procédé de visée collaborative selon la revendication 1.

De cette manière, un opérateur utilisant le dispositif de visée local peut obtenir une image locale dans laquelle un objet visé à partir du dispositif de visée distant est facilement identifiable.

Selon un mode de réalisation, la loi de transformation est obtenue par une approche basée sur une détermination d'une fonction homographique ou sur une approche basée sur un algorithme d'ajustement par lot.

Selon un mode de réalisation, lors de l'étape consistant à contrôler l'affichage d'une image de suivi locale, un réticule est affiché dans l'image de suivi locale à la position de l'objet visé local.

Selon un mode de réalisation, le dispositif de visée local est muni d'un ou plusieurs moteurs capables de diriger automatiquement le dispositif de visée local vers un objet visé et, lors de l'étape consistant à contrôler l'affichage d'une image de suivi locale, la position de l'objet visé local est utilisée pour contrôler chaque moteur de sorte que l'objet visé local apparaisse au centre de l'image de suivi locale.

Selon un mode de réalisation, l'image de désignation distante et l'image de points d'intérêt distante sont une même image ou deux images différentes.

Selon un mode de réalisation, l'image de points d'intérêt locale et l'image de désignation locale sont une même image ou deux images différentes, et lorsque l'image de points d'intérêt locale et l'image de désignation locale sont deux images différentes, une estimation du mouvement de l'objet visé local entre l'image de points d'intérêt locale et l'image de désignation locale est mise en œuvre, la détermination de la position de l'objet visé local dans l'image de désignation locale prend en compte ledit mouvement de l'objet visé local entre l'image de points d'intérêt locale et l'image de désignation locale.

Selon un mode de réalisation, l'image de désignation distante correspond temporellement à l'image de points d'intérêt local.

Selon un deuxième aspect de l'invention, l'invention concerne un système de visée collaborative comprenant un dispositif de visée local et au moins un dispositif de visée distant selon la revendication 8.

Selon un troisième aspect de l'invention, selon la revendication 9, l'invention concerne un produit programme d'ordinateur comportant des instructions pour mettre en œuvre, par un dispositif, le procédé selon le premier aspect, lorsque ledit programme est exécuté par un processeur dudit dispositif.

Selon un quatrième aspect de l'invention, selon la revendication 10, l'invention concerne des moyens de stockage stockant un programme d'ordinateur comportant des instructions pour mettre en œuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un exemple d'un système comportant des dispositifs de visée selon l'invention,
La Fig. 2A représente schématiquement un dispositif de visée selon l'invention,
La Fig. 2B représente schématiquement un dispositif de traitement compris dans le dispositif de visée selon l'invention,
La Fig. 3 illustre schématiquement un exemple d'architecture matérielle apte à mettre en œuvre le dispositif de traitement,
La Fig. 4 représente un algorithme d'un procédé de visée collaborative selon un premier mode de réalisation de l'invention, et
La Fig. 5 représente un algorithme d'un procédé de visée collaborative selon un deuxième mode de réalisation de l'invention.

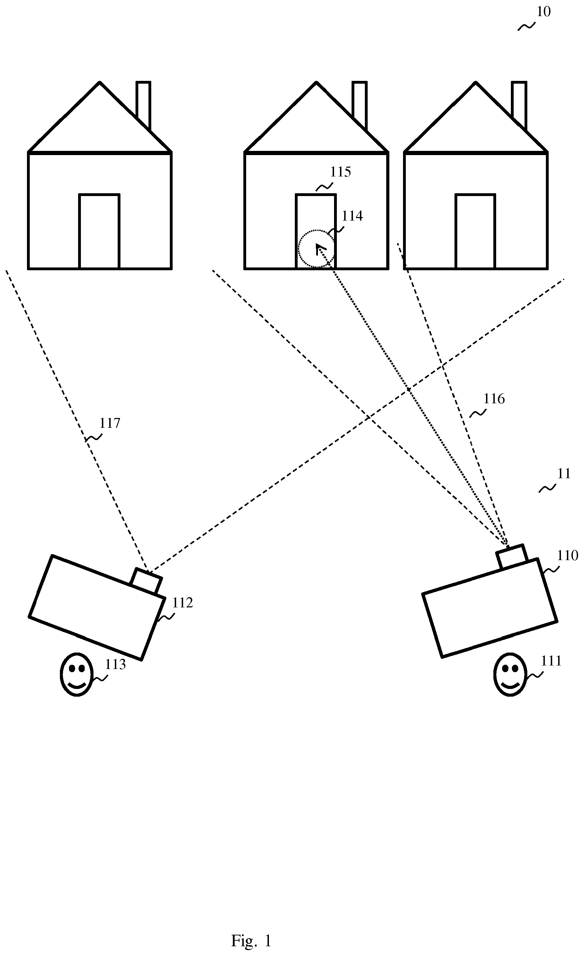

La **Fig. 1** représente schématiquement un exemple d'un système 11 comportant au moins deux dispositifs de visée. Chaque dispositif de visée est apte à acquérir et à afficher des images d'une scène 10 sur laquelle est pointé ledit dispositif de visée et dans laquelle se trouve un objet visé 115. Comme nous le décrivons par la suite, l'objet visé est matérialisé dans lesdites images par exemple par un réticule visuel permettant par exemple à un observateur d'identifier l'objet visé dans lesdites images. Ici, le système 11 comporte deux dispositifs de visée 110 et 112, chaque dispositif de visée 110, 112 étant, dans cet exemple, manipulé par un observateur, respectivement 111 et 113. A l'aide de son dispositif de visée 110, l'observateur 111 se focalise sur une partie de la scène 10 selon un premier point de vue 116 alors que l'observateur 113 se focalise sur une autre partie de la scène 10 selon un deuxième point de vue 117. Chaque observateur possède des moyens de désignation (non représentés) aptes à désigner un objet dans une scène. Dans un mode de réalisation, les moyens de désignation sont intégrés à chaque dispositif de visée. Les moyens de désignation peuvent par exemple être un pointeur laser produit par un désignateur laser. Dans l'exemple de la Fig. 1, l'observateur 111 désigne un objet 115 visé par le dispositif de visée 110, à l'aide de moyens de désignation 114. Nous appelons par la suite le dispositif de visée 110, dispositif de visée distant.

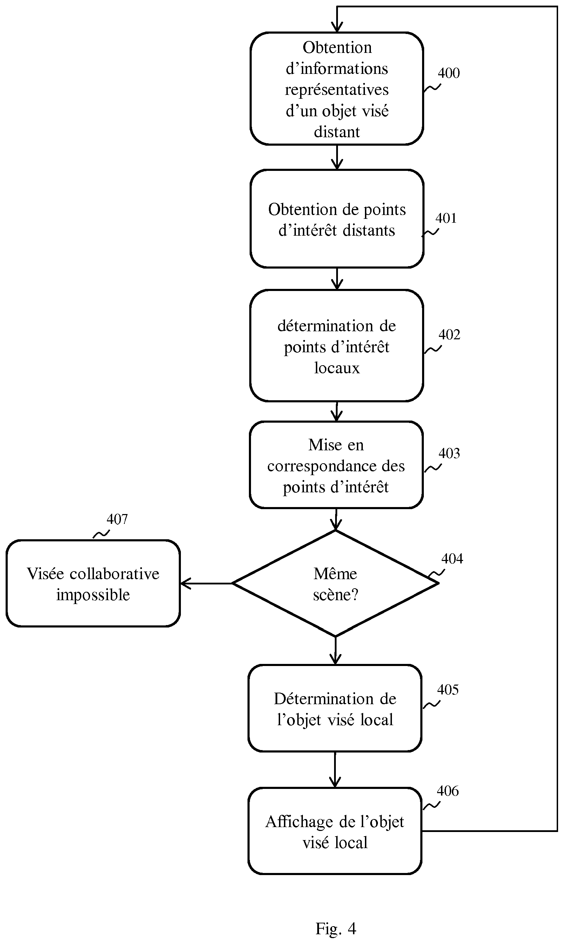

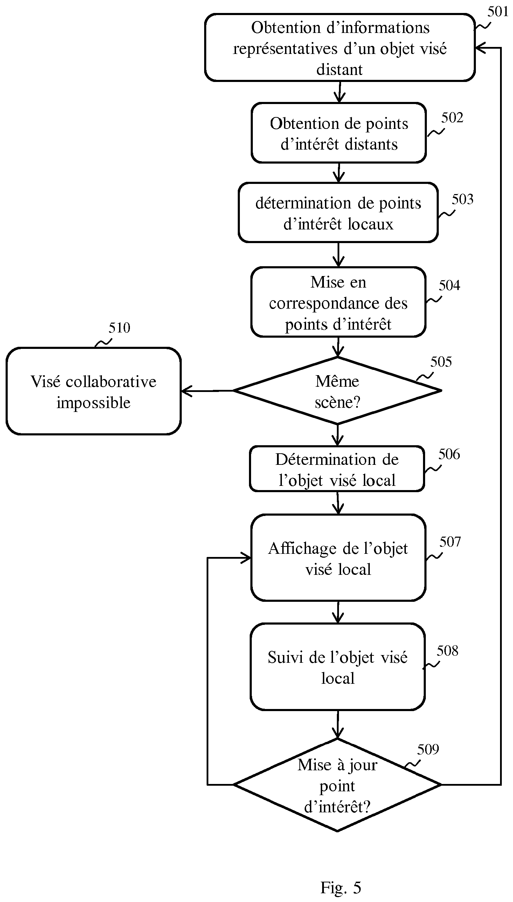

Selon un procédé que nous décrivons plus loin en relation avec les Figs. 4 ou 5, l'observateur 111 transmet des informations représentatives de l'objet visé 115 à l'observateur 113. A l'aide de ces informations, l'observateur 113 utilise son dispositif de visée 112, dit dispositif de visée local, pour retrouver l'objet visé par l'observateur 111 selon un procédé décrit en relation avec les Figs. 4 ou 5.

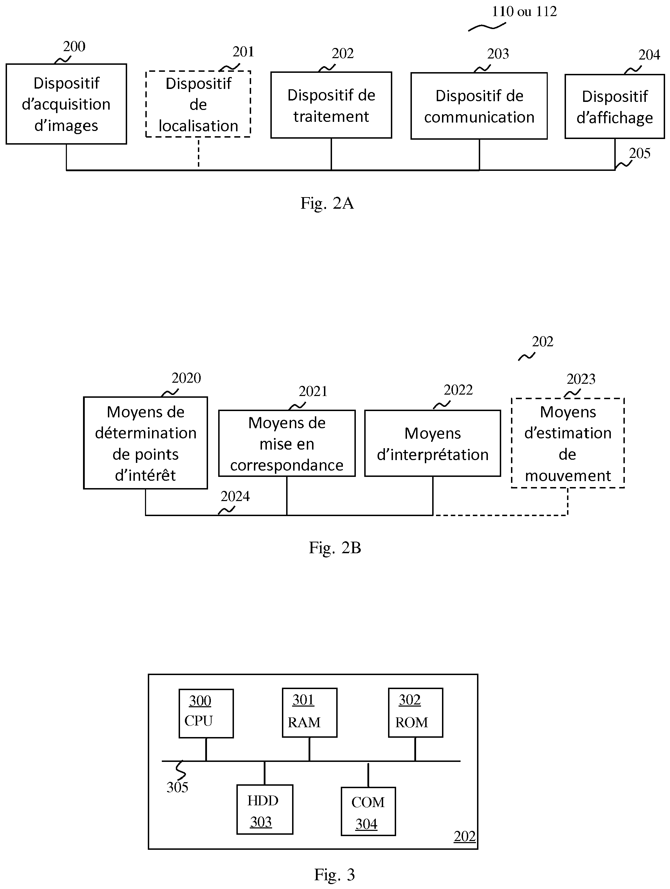

La **Fig. 2A** représente schématiquement un dispositif de visée pouvant être le dispositif de visée local 112 ou distant 110. Le dispositif de visée local 112 (resp. distant 110) comporte un dispositif d'acquisition d'images 200 comportant un module optique et un capteur d'images non représentés. Le dispositif d'acquisition d'images 200 est apte à acquérir des images d'une scène sur laquelle est focalisé le dispositif de visée local 112 (resp. distant 110) avec une fréquence d'images fixée par exemple de trente images par seconde.

Le dispositif de visée local 112 (resp. distant 110) comprend de plus un dispositif de traitement 202 apte à mettre en œuvre un procédé de visée collaborative que nous décrivons par la suite en relation avec la Fig. 4 ou 5. Le dispositif de traitement 202 est décrit par la suite en relation avec la Fig. 2B.

Par ailleurs, le dispositif de visée 20 comprend:
- un dispositif de communication 203 tel qu'un module de communication radio permettant au dispositif de visée local 112 (resp. distant 110) d'échanger des données avec d'autres dispositifs de visée et,
- un dispositif d'affichage 204 tel qu'un écran, un afficheur tête haute ou un œilleton d'un viseur, d'une paire de jumelles, d'un télescope ou d'un appareil photographique.

Dans un mode de réalisation, le dispositif de visée local 112 (resp. distant 110) comprend un dispositif de localisation 201 permettant de déterminer une position géographique du dispositif de visée local 112 (resp. distant 110). Le dispositif de localisation peut comprendre par exemple un module GPS.

Les dispositifs 200 à 204 du dispositif de visée 20 utilisent un bus de communication 205 pour échanger des données, comme par exemple:
- des données d'images qui sont échangées entre le dispositif d'acquisition d'images 200 et les dispositifs de traitement 202 et d'affichage 203,
- des données issues de procédés mis en œuvre par le dispositif de traitement 202 qui sont échangées entre le dispositif de traitement 202 et les dispositifs de communication 203 et d'affichage 204,
- des données de localisation qui sont échangées entre le dispositif de localisation 201 et le dispositif de traitement 202.

La **Fig. 2B** représente schématiquement le dispositif de traitement 202. Le dispositif de traitement 202 comprend des moyens de détermination de points d'intérêt 2020 dans une image. Il est courant d'utiliser des points d'intérêt dans des procédés de recherche d'objet dans une ou plusieurs images. Une recherche d'objet dans une image revient en effet à une recherche de points d'intérêt représentatifs de l'objet dans ladite image. Les points d'intérêt peuvent alors être considérés comme une signature de l'objet. Ces points d'intérêt sont déterminés par des moyens de détermination de points d'intérêt. De nombreuses méthodes de détermination de points d'intérêt ont été proposées dans la littérature. Ces méthodes sont généralement classées en trois catégories :
- Approches basées contours : les approches basées contours comprennent une étape de détection de contours dans une image, et une étape de détermination de points d'intérêt le long des contours. Les points d'intérêt sont alors des points d'intersection de deux contours ou des points sur un contour où la courbure du contour est maximale.
- Approches basées intensité : une approche basée intensité consiste à observer l'intensité des points dans une image et à rechercher des points d'intensité maximale caractéristique d'un point d'intérêt.
- Approches basées modèles : l'approche basée modèle consiste à mettre en évidence un point d'intérêt en comparant une fonction d'intensité des points d'une image avec des modèles théoriques de cette fonction d'intensité.

Les approches basées intensité sont généralement les plus utilisées. Dans un mode de réalisation, les moyens de détermination de points d'intérêt utilisent une méthode basée intensité telle qu'une méthode basée sur l'opérateur de Harris (C. Harris and M. Stephens (1988). "A combined corner and edge detector", Proceedings of the 4th Alvey Vision Conférence, pp. 147-151).

Le dispositif de traitement 202 comprend de plus des moyens de mise en correspondance de points d'intérêts 2021 provenant de deux images différentes. La mise en correspondance de points d'intérêt permet de déterminer si deux images contiennent un ou plusieurs objets identiques. La mise en correspondance de points d'intérêt permet d'apparier des points d'intérêt provenant d'une première image avec des points d'intérêt provenant d'une seconde image et de déterminer une loi de transformation permettant de passer de la première image à la seconde image. La première et la seconde image correspondant à des points de vue différents d'une scène, la détermination de la loi de transformation nécessite de prendre en compte un écart entre les points de vue et une géométrie de la scène. Il existe différentes approches de mise en correspondance de points d'intérêt. On peut citer par exemple :
- Les approches basées sur une détermination d'une fonction homographique permettant de relier des points d'intérêt d'une première image avec des points d'intérêt d'une seconde image.
- Les approches basées sur un algorithme dit « d'ajustement par lot » (« bundle adjustement » en terminologie anglo-saxonne), permettant d'une part de déterminer un écart de point de vue et, d'autre part, de replacer les points d'intérêt appariés dans un espace tridimensionnel.

Les moyens de mise en correspondance de points d'intérêt 2021 prennent deux listes de points d'intérêt en entrée. Une première liste de points d'intérêt, dits « points d'intérêt locaux » provient du moyen de détermination de points d'intérêt 2020 du dispositif de visée local 112 et correspond à une image, dite « image locale » acquise localement par le dispositif d'acquisition d'images 200 du dispositif de visée local 112.

Une seconde liste de points d'intérêt, dits « points d'intérêt distants » est reçue par les moyens de mise en correspondance de points d'intérêt 2021 du dispositif de visée local 112 par l'intermédiaire du dispositif de communication 203 du dispositif de visée local 112. Les points d'intérêt distants correspondent à une image, dite « image distante » acquise par le dispositif de visée distant 110.

Lorsqu'une mise en correspondance de points d'intérêt est possible, les moyens de mise en correspondance 2021 fournissent en sortie, des points d'intérêt appariés et une loi de transformation permettant de passer de l'image distante à l'image locale et inversement. On peut remarquer que lorsque les deux images dont on souhaite mettre en correspondance les points d'intérêt sont très différentes, les points d'intérêt des deux images peuvent ne pas correspondre. Les moyens de mise en correspondance 2021 peuvent alors fournir un nombre de points d'intérêt appariés insuffisant pour déterminer une loi de transformation. Des points d'intérêt peuvent aussi être mis en correspondance par erreur alors qu'ils ne sont pas représentatifs d'un même objet. Dans ce cas, la détermination de la loi de transformation peut s'avérer impossible ou fournir une loi de transformation non valide ne permettant pas de passer d'une image à l'autre.

Par ailleurs, le dispositif de traitement 202 comprend des moyens d'interprétation 2022 aptes à interpréter des résultats transmis par les moyens de mise en correspondance 2021.

L'un des rôles des moyens d'interprétation 2022 est de vérifier les résultats de la mise en correspondance de points d'intérêt. Lorsque les moyens d'interprétation 2022 constatent qu'une loi de transformation a pu être déterminée, ils peuvent en déduire que les scènes regardées par le dispositif de visée distant 110 et le dispositif de visée local 112 ont une forte probabilité d'être identiques.

Un second rôle des moyens d'interprétation 2022 est de déterminer la position d'un objet visé par le dispositif de visée distant 110 dans une image locale acquise par le dispositif de visée local 112. Pour ce faire, les moyens d'interprétation 2022 reçoivent des informations représentatives d'une position d'un objet, dit « objet visé distant », visé par le dispositif de visée distant 110. Lesdites informations sont reçues par l'intermédiaire du dispositif de communication 203 par exemple, en même temps que la liste de points d'intérêt distants. Lesdites informations correspondent à un objet désigné par l'observateur 111 associé au dispositif de visée distant 110 en utilisant son dispositif de désignation. Lorsqu'une loi de transformation a pu être déterminée par les moyens de mise en correspondance 2021, la loi de transformation est appliquée aux informations de localisation de l'objet visé distant ce qui permet d'obtenir des informations de localisation d'un objet, dit « objet visé local » correspondant à l'objet visé distant dans une image locale.

Un troisième rôle des moyens d'interprétation 2022 est de permettre l'identification par un observateur, tel que l'observateur 113, de l'objet visé local dans une image locale. Dans un mode de réalisation, les moyens d'interprétation 2022 transmettent au dispositif d'affichage 204 du dispositif de visée local 112, les informations de localisation de l'objet visé local obtenues précédemment. Le dispositif d'affichage 204 du dispositif de visée local 112 contrôle alors l'affichage de l'image locale en matérialisant l'objet visé local par exemple par un réticule graphique affiché en surimpression de l'image locale.

Selon l'invention, le dispositif de traitement 202 comprend des moyens d'estimation de mouvement 2023 entre deux images. Les moyens d'estimation de mouvement 2023 déterminent des mouvements dans les images acquises par le dispositif d'acquisition d'images 200 par exemple à une cadence correspondant à la fréquence d'images du dispositif d'acquisition d'images 200. Les mouvements ainsi déterminés permettent ensuite de faire un suivi (« tracking » en terminologie anglo-saxonne) des objets visés. Diverses méthodes d'estimation de mouvement peuvent être utilisées telles qu'une méthode de flot optique, déterminant des mouvements de pixels, ou une méthode de mise en correspondance de blocs de pixels (« block matching » en terminologie anglo-saxonne).

Les méthodes d'estimation de mouvement permettent d'estimer des évolutions dans le temps de positions des points d'intérêt distants (lorsque les moyens d'estimation de mouvement 2023 sont mis en œuvre sur des images distantes successives dans le dispositif de visée distant 110) et/ou des points d'intérêt locaux (lorsque les moyens d'estimation de mouvement 2023 sont mis en œuvre dans des images locales successives dans le dispositif de visée local 112) et de calculer de nouvelles lois de transformation en fonction de ces évolutions dans le temps.

Les méthodes d'estimation de mouvement permettent aussi de se focaliser sur les objets visés distants (lorsque les moyens d'estimation de mouvement 2023 sont mis en œuvre sur des images distantes successives dans le dispositif de visée distant 110) et/ou locaux (lorsque les moyens d'estimation de mouvement 2023 sont mis en œuvre dans des images locales successives dans le dispositif de visée local 112) et permettre de déterminer des évolutions dans le temps de positions des objets visés.

Dans un mode de réalisation, les moyens d'estimation de mouvement 2023 sont mis en œuvre par une méthode de mise en correspondance de blocs. Les moyens d'estimation de mouvement 2023 (du dispositif de visée local 112 ou distant 110) reçoivent alors deux images. Parmi ces deux images, une première image, dite « image de référence », comprend au moins un motif dont une position, dite position de référence, dans l'image de référence est connue. Le motif peut être soit un point d'intérêt (local ou distant), soit un objet visé (local ou distant). Lorsque le motif est un point d'intérêt local (resp. distant), la position de référence est donnée par les moyens de détermination de points d'intérêt 2020 du dispositif de visée local 112 (resp. distant 110). Lorsque le motif est un objet visé distant, la position de référence est celle donnée par l'observateur 111. Lorsqu'il s'agit d'un objet visé local, la position de référence est celle obtenue par les moyens d'interprétation 2022 en utilisant la loi de transformation déterminée par les moyens de mise en correspondance 2021 du dispositif de visée local 112.

Au moins un bloc de pixels correspondant au motif est ensuite déterminé dans l'image de référence par les moyens d'estimation de mouvement 2023. Ce bloc de pixels, dit « bloc motif de référence», peut par exemple être un bloc de 8x8 pixels centré sur la position du motif. La seconde image, dite « image de recherche » est une image dans laquelle la position du motif est recherchée. Pour ce faire, les moyens d'estimation de mouvement 2023 cherchent parmi des blocs de pixels 8x8 de l'image de recherche, un bloc de pixels 8x8, dit « bloc motif recherché », le plus proche possible du bloc motif de référence. Une mesure de différence entre blocs telle qu'une somme des différences au carré (« sum of squared différences » (SSD)) en terminologie anglo-saxonne » ou une somme des différences absolue (« sum of absolute différence » '(SAD) en terminologie anglo-saxonne) est alors utilisée. Le bloc motif recherché est le bloc de l'image de recherche minimisant la mesure de différence. La position du bloc motif recherché par rapport à la position du bloc motif de référence est indiquée, par exemple, par un vecteur de mouvement correspondant à une information représentative d'un mouvement du motif entre l'image de référence et l'image de recherche.

On peut noter que les échanges d'informations entre les moyens du dispositif de traitement 202 utilisent par exemple un bus de communication 2024.

La **Fig. 3** illustre schématiquement un exemple d'architecture matérielle du dispositif de traitement 202. Le dispositif de traitement 202 comporte, reliés par un bus de communication 305 : un processeur ou CPU (« Central Processing Unit » en anglais) 300; une mémoire vive RAM (« Random Access Memory » en anglais) 301; une mémoire morte ROM (« Read Only Memory » en anglais) 302; une unité de stockage 303 ou un lecteur de support de stockage, tel qu'un lecteur de cartes SD (« Secure Digital » en anglais) ou de clés USB (« Universal Serial Bus » en anglais) ou un disque dur HDD (« Hard Disk Drive » en anglais); au moins une interface 304 permettant d'échanger des données avec d'autres dispositifs. L'interface 304 permet par exemple au dispositif de traitement 202 de recevoir des images de la part du dispositif d'acquisition d'images 200, des informations de localisation de la part du dispositif de localisation 201, d'échanger des données avec le dispositif de communication 203 et de transmettre des informations de localisation d'un objet local au dispositif d'affichage 204.

Le processeur 300 est capable d'exécuter des instructions chargées dans la RAM 301 à partir de la ROM 302, d'une mémoire externe (non représentée), d'un support de stockage, ou d'un réseau de communication. Lorsque le dispositif de traitement 202 est mis sous tension, le processeur 300 est capable de lire de la RAM 301 des instructions et de les exécuter. Ces instructions forment un programme d'ordinateur causant la mise en œuvre, par le processeur 300, de tout ou partie des moyens compris dans le dispositif de traitement 202, tels que les moyens de détermination de points d'intérêt 2020, les moyens de mise en correspondance 2021, les moyens d'interprétation 2022 et les moyens d'estimation de mouvement 2023 ainsi que des algorithmes et étapes décrits plus loin en relation avec les Figs. 4 et 5.

Tout ou partie des moyens décrits précédemment, et des algorithmes et étapes décrits par la suite peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La **Fig. 4** illustre schématiquement un premier exemple de procédé de visée collaborative mis en œuvre par le dispositif de traitement 202 du dispositif de visée local 112.

Le procédé comprend l'exécution d'une procédure de détermination d'une position d'un objet visé, dit objet visé local, comprenant :
- une étape 400 consistant à obtenir des informations représentatives d'un objet visé distant,
- une étape 401 consistant à obtenir des points d'intérêt distants,
- une étape 402 consistant à déterminer des points d'intérêt locaux,
- une étape 403 consistant à appliquer un procédé de mise en correspondance de points d'intérêt ayant pour objectif d'obtenir une loi de transformation permettant de passer des points d'intérêt distants aux points d'intérêt locaux,
- une étape 404 consistant à vérifier si une loi de transformation a été obtenue,
- si une loi de transformation a été obtenue, une étape 405 consistant à déterminer la position d'un objet visé local correspondant à l'objet visé distant,
- et une étape 406 consistant à contrôler un affichage d'une image locale de manière à permettre l'identification de l'objet visé local par l'observateur 113,
- si aucune loi de transformation n'a été obtenue, une étape 407 au cours de laquelle, les observateurs 111 et 113 sont informés qu'aucune visée collaborative n'est possible.

Comme nous le décrivons par la suite, la procédure de détermination d'une position d'un objet visé local peut être mise en œuvre itérativement.

Lors de l'étape 400, le dispositif de traitement 202 du dispositif de visée local 112 reçoit des informations représentatives de la position d'un objet visé distant. Ces informations proviennent du dispositif de visée distant 110. Ces informations correspondent à un objet visé distant désigné par l'observateur 111 dans une première image distante acquise par le dispositif d'acquisition d'images 200 du dispositif de visée distant 110, dite image de désignation distante.

Lors de l'étape 401, le dispositif de traitement 202 du dispositif de visée local 112 reçoit des informations représentatives d'une liste de points d'intérêt distants. Cette liste de points d'intérêt distants est représentative d'une deuxième image distante, dite image de point d'intérêt distante, acquise par le dispositif d'acquisition d'images 200 du dispositif de visée distant 110. L'image de désignation distante et l'image de points d'intérêt distante peuvent être une même image ou des images différentes. Il est préférable toutefois que les deux images distantes soient proches temporellement pour qu'une loi de transformation calculée à partir des points d'intérêt distants de l'image de point d'intérêt distants puisse permettre d'obtenir un point de visée local à partir du point de visée distant. Les points d'intérêts distants ont été obtenus par le dispositif de traitement 202 du dispositif de visée distant 110 en utilisant les moyens de détermination de points d'intérêt 2020 du dispositif de visée distant 110.

Lors de l'étape 402, suite à la réception des informations représentatives de la position de l'objet visé distant et des points d'intérêt distants, le dispositif de traitement 202 du dispositif de visée local 112 détermine une liste de points d'intérêt locaux. Pour ce faire, les moyens de détermination de points d'intérêt 2020 du dispositif de visée local 112 sont appliqués à une première image locale, dite image de points d'intérêt locale. L'image de points d'intérêt locale et l'image de points d'intérêt distante peuvent correspondre temporellement ou ne pas correspondre. Il est préférable toutefois, pour que la mise en correspondance de points d'intérêt réussisse, que l'image de points d'intérêt locale et l'image de points d'intérêt distante soient proches temporellement.

Lors de l'étape 403, le dispositif de traitement 202 du dispositif de visée local 112 applique un procédé de mise en correspondance de points d'intérêt aux points d'intérêt locaux et aux points d'intérêt distants en utilisant les moyens de mise en correspondance 2021 du dispositif de visée local 112. L'objectif de l'étape 403 est d'apparier des points d'intérêt locaux avec des points d'intérêt distants, puis de déterminer une loi de transformation permettant de passer des points d'intérêt distants aux points d'intérêt locaux.

Lors de l'étape 404, les moyens d'interprétation 2022 du dispositif de traitement 202 du dispositif de visée local 112 obtiennent le résultat de la mise en correspondance. Si aucune loi de transformation n'a pu être déterminée, les moyens d'interprétation 2022 du dispositif de visée local 112 déduisent lors de l'étape 407 que l'objet visé distant n'apparaît pas dans l'image de point d'intérêt local, voire que les observateurs 111 et 113 ne regardent pas la même scène et que par conséquent, aucune visée collaborative n'est possible. Dans ce cas un message peut être envoyé au dispositif de visée distant 110 pour informer l'observateur 111 de la situation en utilisant le dispositif de communication 203 du dispositif de visée local 112.

Lorsqu'une loi de transformation a pu être déterminée, le dispositif de traitement 202 du dispositif de visée local 112 détermine lors de l'étape 405, en utilisant les moyens d'interprétation 2022 du dispositif de visée local 112, la position de l'objet visé local dans une deuxième image locale, dite image de désignation locale. Dans un mode de réalisation, la position de l'objet visé local est déterminée à partir des informations représentatives de la position de l'objet visé distant obtenues lors de l'étape 401 et de la loi de transformation obtenue lors de l'étape 403 par les moyens de mise en correspondance 2021 du dispositif de visée local 112. L'image de points d'intérêt locale et l'image de désignation locale peuvent être une même image ou des images différentes, l'image de désignation locale suivant l'image de points d'intérêt locale. Il est préférable toutefois que l'image de points d'intérêt locale et l'image de désignation locale soient proches temporellement pour que la loi de transformation obtenue en utilisant l'image de points d'intérêt locale soit toujours valide pour l'image de désignation locale. Lors de l'étape 406, les moyens d'interprétation 2022 du dispositif de visée local 112 transmettent au dispositif d'affichage 204 du dispositif de visée local 112, la position de l'objet visé local dans l'image de désignation locale de sorte que le dispositif d'affichage 204 du dispositif de visée local 112 puisse contrôler un affichage de l'image de désignation locale pour permettre une identification de l'objet visé local dans l'image de désignation locale.

Dans un mode de réalisation, un réticule graphique est affiché en surimpression de l'image de désignation locale à la position de l'objet visé local.

Suite à la mise en œuvre de l'étape 406, le dispositif de traitement 202 retourne à l'étape 400 et se met en attente de réception de nouvelles informations représentatives d'un objet visé distant.

Dans un mode de réalisation, la loi de transformation est obtenue par une approche basée sur une détermination d'une fonction homographique.

Dans un mode de réalisation, la loi de transformation est déterminée par une approche basée sur un algorithme d'ajustement par lot.

Dans un mode de réalisation, la position de l'objet visé local est utilisée pour afficher un réticule dans une image locale, dite image de suivi locale suivant l'image de désignation locale. De cette manière, l'observateur 113 peut voir le réticule plus longtemps, ce qui facilite l'identification de l'objet.

Dans un mode de réalisation, deux dispositifs de visée peuvent jouer alternativement ou simultanément un rôle de dispositif de visée distant et de dispositif de visée local.

Dans un mode de réalisation, un dispositif de visée local peut communiquer simultanément avec plusieurs dispositifs de visée distants. Dans ce cas, chaque dispositif de visée distant transmet la position d'un objet visé distant et une liste de points d'intérêt distants. Les objets visés distants désignés par les dispositifs de visée distants peuvent être potentiellement tous différents. Dans ce cas, le dispositif de traitement 202 traite parallèlement les informations provenant de chaque dispositif de visée distant en utilisant le procédé décrit en relation avec la Fig. 4 ou 5 et le dispositif d'affichage 204 affiche plusieurs réticules correspondant à plusieurs objets.

Dans un mode de réalisation, le dispositif de visée local 112 est muni d'un ou plusieurs moteurs capables de diriger automatiquement le dispositif de visée local 112 vers un objet visé, sans qu'un observateur ait à manipuler le dispositif de visée local 112. Dans ce mode de réalisation, l'étape 406 comprend une étape de contrôle des moteurs du dispositif de visée local 112. Lors du contrôle des moteurs du dispositif de visée local 112, la position de l'objet visé local déterminée lors de l'étape 405 est utilisée pour contrôler l'affichage des images locales par exemple en actionnant les moteurs de sorte que l'objet visé local apparaisse au centre des images locales.

Dans un mode de réalisation, le procédé décrit en relation avec la Fig. 4 est réitéré périodiquement par le dispositif de visée local 112, le dispositif de visée 110 distant fournissant périodiquement une nouvelle position de l'objet visé distant et une nouvelle liste de points d'intérêt distants au dispositif de visée local 112.

Le procédé décrit en relation avec la Fig. 4 est adapté au cas où l'objet visé local apparaît avec un mouvement lent dans des images locales successives, voire que cet objet visé local ne possède aucun mouvement. Ce procédé est mal adapté lorsque l'objet visé local apparait avec un mouvement rapide dans les images locales puisqu'une position d'un objet visé local déterminée à un instant donné devient rapidement obsolète.

La **Fig. 5** illustre schématiquement un deuxième exemple de procédé de visée collaborative mis en œuvre par le dispositif de traitement 202 d'un dispositif de visée local 112. Le procédé décrit en relation avec la Fig. 5 est adapté au cas où l'objet visé local apparaît en mouvement dans des images locales successives. Le procédé décrit en relation avec la Fig. 5 comprend une exécution d'une procédure de détermination d'une position de l'objet visé local dans laquelle des étapes 501 à 507 et 510 sont respectivement identiques aux étapes 400 à 406 et 407, décrites en relation avec la Fig. 4.

La procédure de détermination d'une position de l'objet visé local décrite en relation avec la Fig. 5 comprend de plus :
- une étape 508 de suivi de l'objet visé local au cours de laquelle des mouvements de l'objet visé local sont déterminées,
- une étape 509 au cours de laquelle le dispositif de traitement 202 du dispositif de visée local 112 détermine si une mise à jour des points d'intérêt locaux et/ou distants est nécessaire.

Comme nous le décrivons par la suite, la procédure de détermination d'une position de l'objet visé local peut être mise en œuvre de manière itérative.

L'étape 507 est suivie de l'étape 508. Dans un mode de réalisation, l'image de points d'intérêt locale et l'image de désignation locale sont une même image, dite image de points d'intérêt locale. Lors de l'étape 508, la position de l'objet visé local dans une troisième image locale, dite image de suivi locale, suivant l'image de points d'intérêt locale est déterminée. Les moyens d'estimation de mouvement 2023 du dispositif de visée local 112 reçoivent en entrée l'image de points d'intérêt locale, l'image de suivi locale et la position de l'objet visé dans l'image de points d'intérêt locale, cette position ayant été déterminée par les moyens d'interprétation 2022 du dispositif de visée local 112 en utilisant la loi de transformation déterminée lors de l'étape 504. L'image de points d'intérêt locale est utilisée comme image de référence. L'image de suivi locale est utilisée comme image de recherche. Les moyens d'estimation de mouvement 2023 du dispositif de visée local 112 déterminent ensuite des coordonnées d'un vecteur de mouvement correspondant au mouvement de l'objet visé local entre l'image de points d'intérêt locale et l'image de suivi locale. La position de l'objet visé local dans l'image de suivi locale est ensuite déterminée en ajoutant à la position de l'objet visé local dans l'image de suivi locale, les coordonnées du vecteur de mouvement déterminées.

Lors de l'étape 509, le dispositif de traitement 202 du dispositif de visée local 112 détermine s'il est nécessaire de mettre à jour les points d'intérêt locaux et distants. Les points d'intérêt déterminés sur une image ont une durée de validité limitée dépendant des mouvements dans les images. Dans un mode de réalisation, si l'objet visé local présente une amplitude de mouvement supérieure à un premier seuil, le dispositif de traitement 202 du dispositif de visée local 112 considère que les points d'intérêt doivent être mis à jour. L'amplitude d'un mouvement peut être déterminée en calculant une norme du vecteur de mouvement correspondant au mouvement de l'objet visé local. Le dispositif de traitement 202 du dispositif de visée local 112 envoie alors, par l'intermédiaire du dispositif de communication 203 du dispositif de visée local 112, un message au dispositif de visée distant 110 pour qu'il transmette de nouvelles informations représentatives d'une position d'un objet visé distant et de nouveaux points d'intérêt distants et retourne à l'étape 501 lorsque des informations représentatives d'une nouvelle position d'un objet visé distant et une nouvelle liste de points d'intérêt distants sont reçues.

Si les points d'intérêt sont considérés comme valides, l'étape 509 est suivie de l'étape 507 au cours de laquelle un réticule est affiché dans l'image de suivi locale à la position de l'objet visé local déterminée.

Dans un mode de réalisation, les étapes 507, 508 et 509 sont itérées sur plusieurs images de suivi locales successives, l'image de points d'intérêt locale étant utilisée comme image de référence lors de chaque itération.

Dans un mode de réalisation alternatif au mode de réalisation de la Fig. 5, le dispositif de visée distant 110 détermine des évolutions au cours du temps de la position de l'objet visé distant. De cette manière le dispositif de visée distant 110 détermine s'il est nécessaire d'envoyer une nouvelle position de l'objet visé distant et de nouveaux points d'intérêt distants au dispositif de visée local 112. La position de l'objet visé distant dans une troisième image distante, dite image de suivi distante, suivant l'image de désignation distante est déterminée. Les moyens d'estimation de mouvement 2023 du dispositif de visée distant 110 reçoivent en entrée l'image de désignation distante, l'image de suivi distante et la position de l'objet visé dans l'image de désignation distante, cette position ayant été désignée par l'observateur 111. L'image de désignation distante est utilisée comme image de référence. L'image de suivi distante est utilisée comme image de recherche. Les moyens d'estimation de mouvement 2023 du dispositif de visée distant 110 déterminent ensuite un vecteur de mouvement correspondant au mouvement de l'objet visé distant entre l'image de désignation distante et l'image de suivi distante. Une nouvelle position de l'objet visé distant peut alors être calculée par le dispositif de traitement 202 du dispositif de visée distant 110 en utilisant le vecteur de mouvement déterminé. La norme du vecteur de mouvement déterminée est ensuite calculée par le dispositif de traitement 202 du dispositif de visée distant 110 pour mesurer l'amplitude du mouvement de l'objet visé distant entre l'image de désignation distante et l'image de suivi distante. Si l'amplitude du mouvement est supérieure à un deuxième seuil, le dispositif de traitement 202 du dispositif de visée distant 110 détermine de nouveaux points d'intérêt distants et envoie une information représentative de la nouvelle position de l'objet visé distant et une liste comprenant les nouveaux points d'intérêt distants au dispositif de visée local 112. Dans ce mode de réalisation, le dispositif de visée local 112 met en œuvre le procédé décrit en relation avec la Fig. 4 à chaque réception de nouvelles informations représentatives de la position de l'objet visé distant et d'une nouvelle liste de points d'intérêt distants.

Dans un mode de réalisation alternatif au mode de réalisation de la Fig. 5, une amplitude de mouvement est calculée dans une image de suivi distante pour chaque point d'intérêt distant par les moyens d'estimation de mouvement 2023 du dispositif de visée distant 110. Dans ce mode de réalisation, le dispositif de traitement 202 du dispositif de visée distant 110 détermine une proportion de points d'intérêt distants parmi les points d'intérêt distants déterminés sur l'image de points d'intérêt distante présentant une amplitude de mouvement entre l'image de points d'intérêt distante et l'image de suivi distante supérieure à un troisième seuil. Lorsque ladite proportion est supérieure à un quatrième seuil, le dispositif de traitement 202 du dispositif de visée distant 110 détermine de nouveaux points d'intérêt et envoie des informations représentatives d'une nouvelle position de l'objet visé distant et une liste comprenant les nouveaux points d'intérêt distants au dispositif de visée local 112. Dans ce mode de réalisation, le dispositif de visée local 112 met en œuvre le procédé décrit en relation avec la Fig. 4 à chaque réception de nouvelles informations représentatives de la position de l'objet visé distant et d'une nouvelle liste de points d'intérêt distants.

Dans un mode de réalisation, le dispositif de traitement 202 du dispositif de visée distant 110 réalise une estimation de mouvement entre l'image de points d'intérêt distante et une image de suivi distante pour chaque point d'intérêt distant et pour l'objet visé distant. De cette manière, le dispositif de visée distant 110 obtient un vecteur de mouvement pour chaque point d'intérêt distant et pour l'objet visé distant. Dans ce mode de réalisation, le dispositif de traitement 202 du dispositif de visée distant 110 détermine une proportion de points d'intérêt distants parmi les points d'intérêt distants déterminés dans l'image de points d'intérêt distante présentant une amplitude de mouvement entre l'image de points d'intérêt distante et l'image de suivi distante supérieure au troisième seuil. Lorsque ladite proportion est supérieure au quatrième seuil, le dispositif de visée distant 110 envoie les vecteurs de mouvement associés aux points d'intérêt distants et à l'objet visé distant au dispositif de visée local 112. Lorsqu'il reçoit les vecteurs de mouvement, le dispositif de visée local 112 met en œuvre le procédé décrit en relation avec la Fig. 4, en mettant à jour lors des étapes 400 et 401, les positions de l'objet visé distant et des points d'intérêt distants à l'aide des vecteurs de mouvement reçus.

On peut remarquer que les premier, second, troisième et quatrième seuils sont déterminés empiriquement, par exemple lors d'une configuration des dispositifs de visée. Dans un mode de réalisation, l'image de points d'intérêt locale et l'image de désignation locale sont deux images différentes. Ce cas de figure peut se produire lorsque la mise en correspondance des points d'intérêt prend un temps suffisamment important pour qu'au moins une nouvelle image locale ait été acquise par le dispositif d'acquisition d'image 200 du dispositif de visée local 112 après l'image de points d'intérêt locale. Dans ce cas, la loi de transformation obtenue lors de l'étape 403 (ou 504) permet d'obtenir la position de l'objet visé local dans l'image de points d'intérêt locale, mais pas la position de l'objet visé local dans l'image de désignation locale. Dans ce mode de réalisation, une estimation du mouvement de l'objet visé local est réalisée par le dispositif de traitement 202 du dispositif de visée local 112 entre l'image de points d'intérêt locale et l'image de désignation locale. De cette manière, la position de l'objet visé local dans l'image de désignation locale est déterminée.

## Revendications

1. Procédé de visée collaborative entre un dispositif de visée local (112) et un dispositif de visée distant (110) localisés à des positions géographiques différentes et aptes à acquérir au moins une image, appelée respectivement image locale et image distante, le procédé comprenant, lorsqu'il est mis en œuvre par le dispositif de visée local, l'étape suivante:
exécuter une procédure de détermination d'une position d'un objet visé, dit objet visé local, comprenant :
obtenir (400, 501) du dispositif de visée distant des informations représentatives d'une position d'un objet visé, dit objet visé distant, dans une première image distante, dite image de désignation distante ;
obtenir (401, 502) du dispositif de visée distant des informations représentatives de points d'intérêt, dits points d'intérêt distants, représentatifs d'une deuxième image distante, dite image de points d'intérêt distante ;
déterminer (402, 503) des points d'intérêt, dits points d'intérêt locaux, représentatifs d'une première image locale, dite image de points d'intérêt locale ;
appliquer (403, 504) un procédé de mise en correspondance de points d'intérêt aux points d'intérêt locaux et aux points d'intérêt distants ayant pour objectif d'obtenir une loi de transformation permettant de passer des points d'intérêt locaux aux points d'intérêt distants ;
vérifier (404, 505) si l'application du procédé de mise en correspondance a permis d'obtenir une loi de transformation ;
si aucune loi de transformation n'a été obtenue, déterminer (407, 510) qu'aucune visée collaborative n'est possible ;
si une loi de transformation a été obtenue, déterminer (405, 506) dans une deuxième image locale, dite image de désignation locale, la position de l'objet visé local en fonction d'informations de positionnement comprenant, les informations représentatives de la position de l'objet visé distant et la loi de transformation ; et,
contrôler (406, 507) un affichage d'une troisième image locale, dite image de suivi locale, de manière à permettre l'identification de l'objet visé local ;
le dispositif de visée local exécute l'étape consistant à déterminer la position de l'objet visé local lorsqu'il reçoit de la part du dispositif de visée distant, des informations représentatives d'une nouvelle position de l'objet visé distant et des informations représentatives de nouveaux points d'intérêt distants; le procédé étant **caractérisé en ce que**:
le dispositif de visée local obtenant des informations représentatives d'une nouvelle position de l'objet visé distant et des informations représentatives de nouveaux points d'intérêt distants lorsqu'un des deux cas suivants se produit :
lorsqu'une amplitude d'un mouvement de l'objet visé distant entre l'image de désignation distante et une troisième image distante, dite image de suivi distante, suivant l'image de désignation distante est supérieure à un premier seuil prédéfinie ;
lorsqu'une proportion de points d'intérêt distants dont une amplitude de mouvement entre l'image de désignation distante et l'image de suivi distante est supérieure au premier seuil prédéfini, est supérieure à un second seuil prédéfini.

2. Procédé selon la revendication 1, **caractérisé en ce que** la loi de transformation est obtenue par une approche basée sur une détermination d'une fonction homographique ou sur une approche basée sur un algorithme d'ajustement par lot.

3. Procédé selon la revendication 1 ou 2, **caractérisé en ce que**, lors de l'étape consistant à contrôler l'affichage d'une image de suivi locale, un réticule est affiché dans l'image de suivi locale à la position de l'objet visé local.

4. Procédé selon l'une des revendications 1 ou 2, **caractérisé en ce que** le dispositif de visée local est muni d'un ou plusieurs moteurs capables de diriger automatiquement le dispositif de visée local vers un objet visé et **en ce que** lors de l'étape consistant à contrôler l'affichage d'une image de suivi locale, la position de l'objet visé local est utilisée pour contrôler chaque moteur de sorte que l'objet visé local apparaisse au centre de l'image de suivi locale.

5. Procédé selon l'une quelconque des revendications précédentes, **caractérisé en ce que** l'image de désignation distante et l'image de points d'intérêt distante sont une même image ou deux images différentes.

6. Procédé selon l'une quelconque des revendications précédentes, **caractérisé en ce que** l'image de points d'intérêt locale et l'image de désignation locale sont une même image ou deux images différentes, et **en ce que** lorsque l'image de points d'intérêt locale et l'image de désignation locale sont deux images différentes, une estimation du mouvement de l'objet visé local entre l'image de points d'intérêt locale et l'image de désignation locale est mise en œuvre, la détermination de la position de l'objet visé local dans l'image de désignation locale prend en compte ledit mouvement de l'objet visé local entre l'image de points d'intérêt locale et l'image de désignation locale.

7. Procédé selon l'une quelconque des revendications précédentes, **caractérisé en ce que** l'image de désignation distante correspond temporellement à l'image de points d'intérêt local.

8. Système de visée collaborative comprenant un dispositif de visée local et un dispositif de visé distant,
le dispositif de visée local étant situé à une première position géographique et apte à acquérir des images, appelées images locales, le dispositif de visée local comprenant:
des moyens d'exécution d'une procédure de détermination d'une position d'un objet visé, dit objet visé local, comprenant :
des moyens d'obtention (400, 501, 203) du dispositif de visée distant d'informations représentatives d'une position d'un objet visé, dit objet visé distant, dans une première image acquise par le dispositif de visée distant, dite image de désignation distante,
des moyens d'obtention (401, 502, 203) du dispositif de visée distant des informations représentatives de points d'intérêt, dits points d'intérêt distants, représentatifs d'une deuxième image acquise par le dispositif de visée distant, dites images de points d'intérêt distante ;
des moyens de détermination (402, 503) de points d'intérêt, dits points d'intérêt locaux, représentatifs d'une première image locale, dite image de points d'intérêt locale ;
des moyens d'application (403, 504) d'un procédé de mise en correspondance de points d'intérêt aux points d'intérêt locaux et aux points d'intérêt distants ayant pour objectif d'obtenir une loi de transformation permettant de passer des points d'intérêt locaux et aux points d'intérêt distants ;
des moyens pour vérifier (404, 505) si l'application du procédé de mise en correspondance a permis d'obtenir une loi de transformation ;
des moyens pour déterminer (407, 510) qu'aucune visée collaborative n'est mise en œuvre si aucune loi de transformation n'a été obtenue ;
des moyens pour déterminer (405, 506) dans une deuxième image locale, dite image de désignation locale, la position de l'objet visé local en fonction d'informations de positionnement comprenant, les informations représentatives de la position de l'objet visé distant et la loi de transformation ; et,
des moyens pour contrôler (406, 507) un affichage d'une troisième image locale, dite image de suivi locale, de manière à permettre l'identification de l'objet visé local, mis en œuvre si une loi de transformation a été obtenue ;
le dispositif de visée local étant adapté pour exécuter l'étape consistant à déterminer la position de l'objet visé local lorsqu'il reçoit de la part du dispositif de visée distant, des informations représentatives d'une nouvelle position de l'objet visé distant et des informations représentatives de nouveaux points d'intérêt distants,
le dispositif de visée distant étant situé à une seconde position géographique différente de la première position géographique et apte à acquérir des images, appelées images distantes, le dispositif de visée distant comprenant:
des moyens de désignation de l' objet visé distant; des moyens de détermination (2020) des points d'intérêt distants
des moyens de transmission des informations représentatives de la position de l'objet visé distant et des points d'intérêt distants au dispositif de visée local;
le système de visée collaborative étant **caractérisé en ce que**:
le dispositif de visée local obtient des informations représentatives d'une nouvelle position de l'objet visé distant et des informations représentatives de nouveaux points d'intérêt distants lorsqu'un des deux cas suivants se produit:
lorsqu'une amplitude d'un mouvement de l'objet visé distant entre l'image de désignation distante et une troisième image distante, dite image de suivi distante, suivant l'image de désignation distante est supérieure à un premier seuil prédéfinie;
lorsqu'une proportion de points d'intérêt distants, dont une amplitude de mouvement entre l'image de désignation distante et l'image de suivi distante est supérieure au premier seuil prédéfini, est supérieure à un second seuil prédéfini.

9. Produit programme d'ordinateur, **caractérisé en ce qu'**il comporte des instructions pour mettre en œuvre, par un dispositif, le procédé selon l'une quelconque des revendications 1 à 7, lorsque ledit programme est exécuté par un processeur dudit dispositif.

10. Moyens de stockage, **caractérisés en ce qu'**ils stockent un programme d'ordinateur comportant des instructions pour mettre en œuvre, par un dispositif, le procédé selon l'une quelconque des revendications 1 à 7 lorsque ledit programme est exécuté par un processeur dudit dispositif.

## Patentansprüche

1. Verfahren zum kooperativen Anvisieren zwischen einer lokalen Visiervorrichtung (112) und einer entfernten Visiervorrichtung (110), die sich an verschiedenen geographischen Positionen befinden und geeignet sind, wenigstens ein Bild, lokales Bild bzw. entferntes Bild genannt, zu erfassen, wobei das Verfahren, wenn es von der lokalen Visiervorrichtung durchgeführt wird, den folgenden Schritt umfasst:
Ausführen einer Prozedur zur Bestimmung einer Position eines anvisierten Objekts, lokales anvisiertes Objekt genannt, welche umfasst:
Gewinnen (400, 501), von der entfernten Visiervorrichtung, von Informationen, die für eine Position eines anvisierten Objekts, entferntes anvisiertes Objekt genannt, in einem ersten entfernten Bild, entferntes Bezeichnungsbild genannt, repräsentativ sind;
Gewinnen (401, 502), von der entfernten Visiervorrichtung, von Informationen, die für Points of Interest, entfernte Points of Interest genannt, repräsentativ sind, die für ein zweites entferntes Bild, entferntes Bild von Points of Interest genannt, repräsentativ sind;
Bestimmen (402, 503) von Points of Interest, lokale Points of Interest genannt, die für ein erstes lokales Bild, lokales Bild von Points of Interest genannt, repräsentativ sind;
Anwenden (403, 504) eines Verfahrens zur Zuordnung von Points of Interest zu den lokalen Points of Interest und zu den entfernten Points of Interest mit dem Ziel, ein Transformationsgesetz zu gewinnen, welches ermöglicht, von den lokalen Points of Interest zu den entfernten Points of Interest überzugehen;
Überprüfen (404, 505), ob die Anwendung des Verfahrens zur Zuordnung ermöglicht hat, ein Transformationsgesetz zu gewinnen;
falls kein Transformationsgesetz gewonnen worden ist, Bestimmen (407, 510), dass kein kooperatives Anvisieren möglich ist;
falls ein Transformationsgesetz gewonnen worden ist, Bestimmen (405, 506), in einem zweiten lokalen Bild, lokales Bezeichnungsbild genannt, der Position des lokalen anvisierten Objekts in Abhängigkeit von Positionsbestimmungsinformationen, welche die Informationen, die für die Position des entfernten anvisierten Objekts repräsentativ sind, und das Transformationsgesetz umfassen; und
Steuern (406, 507) einer Anzeige eines dritten lokalen Bildes, lokales Nachverfolgungsbild genannt, um die Identifikation des lokalen anvisierten Objekts zu ermöglichen;
wobei die lokale Visiervorrichtung einen Schritt ausführt, der darin besteht, die Position des lokalen anvisierten Objekts zu bestimmen, wenn sie von der entfernten Visiervorrichtung Informationen, die für eine neue Position des entfernten anvisierten Objekts repräsentativ sind, und Informationen, die für neue entfernte Points of Interest repräsentativ sind, empfängt;
wobei das Verfahren **dadurch gekennzeichnet ist, dass**:
die lokale Visiervorrichtung Informationen, die für eine neue Position des entfernten anvisierten Objekts repräsentativ sind, und Informationen, die für neue entfernte Points of Interest repräsentativ sind, erhält, wenn einer der folgenden zwei Fälle eintritt:
wenn eine Amplitude einer Bewegung des entfernten anvisierten Objekts zwischen dem entfernten Bezeichnungsbild und einem dritten entfernten Bild, entferntes Nachverfolgungsbild genannt, das dem entfernten Bezeichnungsbild folgt, größer als ein erster vordefinierter Schwellenwert ist;
wenn ein Anteil von entfernten Points of Interest, für die eine Bewegungsamplitude zwischen dem entfernten Bezeichnungsbild und dem entfernten Nachverfolgungsbild größer als der erste vordefinierte Schwellenwert ist, größer als ein zweiter vordefinierter Schwellenwert ist.

2. Verfahren nach Anspruch 1, **dadurch gekennzeichnet, dass** das Transformationsgesetz durch einen Ansatz erhalten wird, der auf einer Bestimmung einer homographischen Funktion basiert, oder auf einem Ansatz, der auf einem Algorithmus der satzweisen Anpassung basiert.

3. Verfahren nach Anspruch 1 oder 2, **dadurch gekennzeichnet, dass** in dem Schritt, der darin besteht, die Anzeige eines lokalen Nachverfolgungsbildes zu steuern, ein Fadenkreuz in dem lokalen Nachverfolgungsbild an der Position des lokalen anvisierten Objekts angezeigt wird.

4. Verfahren nach einem der Ansprüche 1 oder 2, **dadurch gekennzeichnet, dass** die lokale Visiervorrichtung mit einem oder mehreren Motoren ausgestattet ist, die in der Lage sind, die lokale Visiervorrichtung automatisch in Richtung eines anvisierten Objekts zu lenken, und dadurch, dass in dem Schritt, der darin besteht, die Anzeige eines lokalen Nachverfolgungsbildes zu steuern, die Position des lokalen anvisierten Objekts verwendet wird, um jeden Motor derart zu steuern, dass das lokale anvisierte Objekt in der Mitte des lokalen Nachverfolgungsbildes erscheint.

5. Verfahren nach einem der vorhergehenden Ansprüche, **dadurch gekennzeichnet, dass** das entfernte Bezeichnungsbild und das entfernte Bild von Points of Interest ein und dasselbe Bild oder zwei verschiedene Bilder sind.

6. Verfahren nach einem der vorhergehenden Ansprüche, **dadurch gekennzeichnet, dass** das lokale Bild von Points of Interest und das lokale Bezeichnungsbild ein und dasselbe Bild oder zwei verschiedene Bilder sind, und dadurch, dass, wenn das lokale Bild von Points of Interest und das lokale Bezeichnungsbild zwei verschiedene Bilder sind, eine Schätzung der Bewegung des lokalen anvisierten Objekts zwischen dem lokalen Bild von Points of Interest und dem lokalen Bezeichnungsbild vorgenommen wird und die Bestimmung der Position des lokalen anvisierten Objekts in dem lokalen Bezeichnungsbild die Bewegung des lokalen anvisierten Objekts zwischen dem lokalen Bild von Points of Interest und dem lokalen Bezeichnungsbild berücksichtigt.

7. Verfahren nach einem der vorhergehenden Ansprüche, **dadurch gekennzeichnet, dass** das entfernte Bezeichnungsbild zeitweilig dem lokalen Bild von Points of Interest entspricht.

8. System zum kooperativen Anvisieren, welches eine lokale Visiervorrichtung und eine entfernte Visiervorrichtung umfasst,
wobei sich die lokale Visiervorrichtung an einer ersten geographischen Position befindet und geeignet ist, Bilder, lokale Bilder genannt, zu erfassen, wobei die lokale Visiervorrichtung umfasst:
Mittel zur Ausführung einer Prozedur zur Bestimmung einer Position eines anvisierten Objekts, lokales anvisiertes Objekt genannt, welche umfassen:
Mittel zur Gewinnung (400, 501, 203), von der entfernten Visiervorrichtung, von Informationen, die für eine Position eines anvisierten Objekts, entferntes anvisiertes Objekt genannt, in einem ersten von der entfernten Visiervorrichtung erfassten Bild, entferntes Bezeichnungsbild genannt, repräsentativ sind;
Mittel zur Gewinnung (401, 502, 203), von der entfernten Visiervorrichtung, der Informationen, die für Points of Interest, entfernte Points of Interest genannt, repräsentativ sind, die für ein zweites von der entfernten Visiervorrichtung erfasstes Bild, entferntes Bild von Points of Interest genannt, repräsentativ sind;
Mittel zur Bestimmung (402, 503) von Points of Interest, lokale Points of Interest genannt, die für ein erstes lokales Bild, lokales Bild von Points of Interest genannt, repräsentativ sind;
Mittel zur Anwendung (403, 504) eines Verfahrens zur Zuordnung von Points of Interest zu den lokalen Points of Interest und zu den entfernten Points of Interest mit dem Ziel, ein Transformationsgesetz zu gewinnen, welches ermöglicht, von den lokalen Points of Interest zu den entfernten Points of Interest überzugehen; Mittel zum Überprüfen (404, 505), ob die Anwendung des Verfahrens zur Zuordnung ermöglicht hat, ein Transformationsgesetz zu gewinnen;
Mittel zum Bestimmen (407, 510), dass kein kooperatives Anvisieren durchgeführt wird, falls kein Transformationsgesetz gewonnen worden ist; Mittel zum Bestimmen (405, 506), in einem zweiten lokalen Bild, lokales Bezeichnungsbild genannt, der Position des lokalen anvisierten Objekts in Abhängigkeit von Positionsbestimmungsinformationen, welche die Informationen, die für die Position des entfernten anvisierten Objekts repräsentativ sind, und das Transformationsgesetz umfassen; und
Mittel zum Steuern (406, 507) einer Anzeige eines dritten lokalen Bildes, lokales Nachverfolgungsbild genannt, um die Identifikation des lokalen anvisierten Objekts zu ermöglichen, die durchgeführt wird, falls ein Transformationsgesetz gewonnen worden ist;
wobei die lokale Visiervorrichtung dafür ausgelegt ist, einen Schritt auszuführen, der darin besteht, die Position des lokalen anvisierten Objekts zu bestimmen, wenn sie von der entfernten Visiervorrichtung Informationen, die für eine neue Position des entfernten anvisierten Objekts repräsentativ sind, und Informationen, die für neue entfernte Points of Interest repräsentativ sind, empfängt;
wobei sich die entfernte Visiervorrichtung an einer zweiten geographischen Position befindet, die von der ersten geographischen Position verschieden ist, und geeignet ist, Bilder, entfernte Bilder genannt, zu erfassen, wobei die entfernte Visiervorrichtung umfasst:
Mittel zur Bezeichnung des entfernten anvisierten Objekts;
Mittel zur Bestimmung (2020) der entfernten Points of Interest;
Mittel zur Übertragung der Informationen, die für die Position des entfernten anvisierten Objekts und die entfernten Points of Interest repräsentativ sind, an die lokale Visiervorrichtung;
wobei das System zum kooperativen Anvisieren **dadurch gekennzeichnet ist, dass**:
die lokale Visiervorrichtung Informationen, die für eine neue Position des entfernten anvisierten Objekts repräsentativ sind, und Informationen, die für neue entfernte Points of Interest repräsentativ sind, erhält, wenn einer der folgenden zwei Fälle eintritt:
wenn eine Amplitude einer Bewegung des entfernten anvisierten Objekts zwischen dem entfernten Bezeichnungsbild und einem dritten entfernten Bild, entferntes Nachverfolgungsbild genannt, das dem entfernten Bezeichnungsbild folgt, größer als ein erster vordefinierter Schwellenwert ist;
wenn ein Anteil von entfernten Points of Interest, für die eine Bewegungsamplitude zwischen dem entfernten Bezeichnungsbild und dem entfernten Nachverfolgungsbild größer als der erste vordefinierte Schwellenwert ist, größer als ein zweiter vordefinierter Schwellenwert ist.

9. Computerprogrammprodukt, **dadurch gekennzeichnet, dass** es Anweisungen zur Durchführung, durch eine Vorrichtung, des Verfahrens nach einem der Ansprüche 1 bis 7, wenn das Programm von einem Prozessor der Vorrichtung ausgeführt wird, umfasst.

10. Speichermittel, **dadurch gekennzeichnet, dass** sie ein Computerprogramm speichern, welches Anweisungen zur Durchführung, durch eine Vorrichtung, des Verfahrens nach einem der Ansprüche 1 bis 7, wenn das Programm von einem Prozessor der Vorrichtung ausgeführt wird, umfasst.

## Claims

1. Method for collaborative sighting between a local sighting device (112) and a remote sighting device (110) that are located at different geographic positions and able to acquire at least one image, called the local image and the remote image, respectively, the method comprising, when it is implemented by the local sighting device, the following step:
executing a procedure for determining a position of a sighted object, called the local sighted object, comprising:
obtaining (400, 501) from the remote sighting device information representative of a position of a sighted object, called the remote sighted object, in a first remote image, called the remote designation image;
obtaining (401, 502) from the remote sighting device information representative of points of interest, called remote points of interest, that are representative of a second remote image, called the remote image of points of interest;
determining (402, 503) points of interest, called local points of interest, that are representative of a first local image, called the local image of points of interest;
applying (403, 504) a method for matching points of interest to the local points of interest and to the remote points of interest, the objective of this being to obtain a conversion relationship allowing remote points of interest to be passed to from local points of interest;
checking (404, 505) whether the application of the matching method has allowed a conversion relationship to be obtained;
if no conversion relationship was obtained, determining (407, 510) that collaborative sighting is not possible;
if a conversion relationship was obtained, determining (405, 506), in a second local image, called the local designation image, the position of the local sighted object depending on positioning information comprising the information representative of the position of the remote sighted object and the conversion relationship; and
controlling (406, 507) a display of a third local image, called the local tracking image, so as to allow the local sighted object to be identified;
the local sighting device executes the step consisting in determining the position of the local sighted object when it receives, from the remote sighting device, information representative of a new position of the remote sighted object and information representative of new remote points of interest;
the method being **characterized in that**:
the local sighting device obtains information representative of a new position of the remote sighted object and information representative of new remote points of interest when one of the two following cases arises:
when an amplitude of a movement of the remote sighted object between the remote designation image and a third remote image, called the remote tracking image, following the remote designation image is greater than a first predefined threshold;
when a proportion of remote points of interest, an amplitude of movement of which between the remote designation image and the remote tracking image is greater than the first predefined threshold, is greater than a second predefined threshold.

2. Method according to Claim 1, **characterized in that** the conversion relationship is obtained via an approach based on determining a homographic function or an approach based on a bundle-adjustment algorithm.

3. Method according to Claim 1 or 2, **characterized in that**, in the step consisting in controlling the display of a local tracking image, a reticle is displayed in the local tracking image at the position of the local sighted object.

4. Method according to either of Claims 1 and 2, **characterized in that** the local sighting device is equipped with one or more motors capable of automatically directing the local sighting device toward a sighted object and **in that**, in the step consisting in controlling the display of a local tracking image, the position of the local sighted object is used to control each motor so that the local sighted object appears at the centre of the local tracking image.

5. Method according to any one of the preceding claims, **characterized in that** the remote designation image and the remote image of points of interest are the same image or two different images.

6. Method according to any one of the preceding claims, **characterized in that** the local image of points of interest and the local designation image are the same image or two different images, and **in that**, when the local image of points of interest and the local designation image are two different images, an estimation of the movement of the local sighted object between the local image of points of interest and the local designation image is carried out, the determination of the position of the local sighted object in the local designation image taking into account said movement of the local sighted object between the local image of points of interest and the local designation image.

7. Method according to any one of the preceding claims, **characterized in that** the remote designation image corresponds temporally to the local image of points of interest.

8. System for collaborative sighting comprising a local sighting device and a remote sighting device, the local sighting device being located at a first geographic position and able to acquire images, called local images, the local sighting device comprising:
means for executing a procedure for determining a position of a sighted object, called the local sighted object, comprising:
means for obtaining (400, 501, 203) from the remote sighting device information representative of a position of a sighted object, called the remote sighted object, in a first image acquired by the remote sighting device, which image is called the remote designation image;
means for obtaining (401, 502, 203) from the remote sighting device information representative of points of interest, called remote points of interest, that are representative of a second image acquired by the remote sighting device, which images are called remote images of points of interest;
means for determining (402, 503) points of interest, called local points of interest, that are representative of a first local image, called the local image of points of interest;
means for applying (403, 504) a method for matching points of interest to the local points of interest and to the remote points of interest, the objective of this being to obtain a conversion relationship allowing remote points of interest to be passed to from local points of interest;
means for checking (404, 505) whether the application of the matching method has allowed a conversion relationship to be obtained;
means for determining (407, 510) that collaborative sighting is not possible if no conversion relationship was obtained;
means for determining (405, 506), in a second local image, called the local designation image, the position of the local sighted object depending on positioning information comprising the information representative of the position of the remote sighted object and the conversion relationship; and
means for controlling (406, 507) a display of a third local image, called the local tracking image, so as to allow the local sighted object to be identified, implemented if a conversion relationship was obtained;
the local sighting device being suitable for executing the step consisting in determining the position of the local sighted object when it receives, from the remote sighting device, information representative of a new position of the remote sighted object and information representative of new remote points of interest, the remote sighting device being located at a second geographic position different from the first geographic position and able to acquire images, called remote images, the remote sighting device comprising:
means for designating the remote sighted object;
means for determining (2020) remote points of interest;
means for transmitting information representative of the position of the remote sighted object and remote points of interest to the local sighting device;
the system for collaborative sighting being **characterized in that**:
the local sighting device obtains information representative of a new position of the remote sighted object and information representative of new remote points of interest when one of the two following cases arises:
when an amplitude of a movement of the remote sighted object between the remote designation image and a third remote image, called the remote tracking image, following the remote designation image is greater than a first predefined threshold;
when a proportion of remote points of interest, an amplitude of movement of which between the remote designation image and the remote tracking image is greater than the first predefined threshold, is greater than a second predefined threshold.

9. Computer-program product, **characterized in that** it comprises instructions for implementing, with a device, the method according to any one of Claims 1 to 7, when said program is executed by a processor of said device.

10. Storage means, **characterized in that** they store a computer program comprising instructions for implementing, with a device, the method according to any one of Claims 1 to 7 when said program is executed by a processor of said device.
